# EUROPEAN PATENT APPLICATION

(11) **EP 4 410 402 A1**
(43) Date of publication of application: **07.08.2024**
(21) Application number: 23154093.1
(22) Date of filing: 31.01.2023
(51) Int. Cl.: B01D 53/04, B01D 53/26, B60H 3/06

(54) **SORPTION FILTER CARTRIDGE AND SORPTION FILTER ELEMENT**

(71) Applicant: MANN+HUMMEL GmbH, 71636 Ludwigsburg (DE)
(72) Inventor: MBADINGA MOUANDA, Gelase, 74343 Sachsenheim (DE); EVLEKLI, Coskun, 71332 Waiblingen (DE); WÖRZ, Tobias, 71397 Leutenbach (DE); PROCHAZKA, Josef, 59401 Velke Mezirici (CZ); GEHWOLF, Klaus, 94437 Mamming (DE); GÜNTNER, Robert, 94419 Reisbach (DE); KRIEGER, Joachim-Paul, 94419 Reisbach (DE)
(74) Representative: Mann + Hummel Intellectual Property

(57) **Abstract**

A sorption filter cartridge (19, 20) for a sorption filter element (18), includes a fluid permeable housing (47). The housing (47) encloses a plurality of housing rooms (63, 64, 65, 66) that are separated from each other. Each housing room (63, 64, 65, 66) receives at least two layers (75, 77, 78) of non-woven fiber material and a granulate portion (76) comprising at least one sorbent (8, 9). The granulate portion (76) is sandwiched between the at least two layers (75, 77, 78).

## Description

### Technical Field

The present invention relates to a sorption filter cartridge for a sorption filter element and to a sorption filter element comprising such a sorption filter cartridge.

### Background Art

In the case of vehicles that are at least partially electrically powered, it is advisable to save as much energy as possible in order to achieve the longest possible range. For reasons of comfort, the passenger compartment of such a vehicle can usually be air conditioned with the aid of an air conditioning system. With regard to the desired energy savings, it is advantageous if the air conditioning system for air conditioning the passenger compartment draws in as little fresh air as possible from the vehicle's surroundings and heats or cools it, but instead recirculates and air conditions the air in the passenger compartment.

In the aforementioned recirculation mode for air conditioning the passenger compartment, however, water contained in the exhaled air of occupants or passengers can accumulate in the passenger compartment, which can lead to fogging of windows, for example a windshield or side windows, of the motor vehicle. The reason for this is that the dehumidifying effect of an air conditioning system, which results from a dew point undershoot in the evaporator heat exchanger, cannot be used during the recirculation mode. This must be avoided or at least reduced with regard to safety aspects.

Furthermore, carbon dioxide contained in the exhaled air can also accumulate in the passenger compartment. This can lead to concentration problems or even health problems for the occupants. This, too, must be prevented or at least reduced with regard to both safety and health aspects, since in the worst-case scenario, an excessively high concentration of carbon dioxide in the passenger compartment air can reduce the driver's ability to concentrate to such an extent that accidents are imminent.

### Summary

It is therefore an object of the invention to provide an improved sorption filter cartridge for a sorption filter element.

Accordingly, a sorption filter cartridge for a sorption filter element is provided. The sorption filter cartridge comprises a fluid permeable housing, wherein the housing encloses a plurality of housing rooms that are separated from each other, wherein each housing room receives at least two layers of non-woven fiber material and a granulate portion comprising at least one sorbent, and wherein the granulate portion is sandwiched between the at least two layers.

The sorption filter cartridge is particularly suitable for adsorbing and/or absorbing carbon dioxide and water. However, also substances like nitrogen oxides (NOX) and/or volatile organic compounds (VOCs) can be adsorbed and/or absorbed by the sorption filter cartridge. Examples of volatile organic compounds are higher hydrocarbons. The sorption filter cartridge may also be suitable for adsorbing and/or absorbing sulfur dioxide (S02).

In the present context, "sorption" refers to processes that lead to an enrichment of a substance, for example carbon dioxide or water, within a phase or on an interface between two phases. Accumulation within a phase is referred to as absorption, while accumulation at the interface is referred to as adsorption. In the present context, "desorption" refers to processes in which atoms or molecules, in particular carbon dioxide or water, leave the surface of a solid. Desorption thus generally represents the reverse process of sorption. By applying heat to the sorbent, the adsorbed and/or absorbed substances can be released from the sorbent.

In a sorption mode, the sorption filter cartridge adsorbs and/or absorbs different substances like carbon dioxide and/or water. In a desorption mode, the enriched substances can be released from the sorption filter cartridge. Thus, the sorption filter cartridge can be regenerated. In the desorption mode, heat is applied to the sorption filter cartridge, in particular to the sorbent. The sorption filter cartridge may be a pure adsorption filter cartridge or may be designated as such. Preferably, the sorption filter cartridge can be easily and quickly replaced. The sorption mode may also be, or be designated as, a pure adsorption mode. The desorption mode may also be referred to as regeneration mode.

The sorption filter cartridge preferably comprises several sorbents. In particular, a sorbent suitable to sorb, especially to adsorb, carbon dioxide may be provided. This sorbent may be referred to as carbon dioxide sorbent or CO2 sorbent. Another sorbent may be provided that is suitable to sorb, especially adsorb, water. This sorbent may be referred to as water sorbent or H2O sorbent. The sorbents may be in granular or fibrous form, in particular in bulk form. In particular, the sorbents are fixed by means of a carrier material. The sorbents may also be pure adsorbents or be designated as such. Raw air may be guided through the sorbents in a parallel or serial way.

In the desorption mode, regeneration air can be taken from an enclosed air volume or from an environment. Initially, the regeneration air is unloaded. In the desorption mode, the unloaded regeneration air is loaded with carbon dioxide and water and supplied to the environment as loaded regeneration air. By the fact that the regeneration air is "unloaded" with carbon dioxide and water, it is to be understood in particular that the regeneration air can absorb stored carbon dioxide and water in the sorption filter cartridge being in desorption mode. However, this does not preclude the unloaded regeneration air from also being able to absorb a certain amount of carbon dioxide and water. However, the unloaded regeneration air is not saturated with carbon dioxide and water.

The housing being "fluid permeable" in this context means that a fluid, in particular air, can be guided through the housing so that the air comes into contact with the sorbent or the sorbents. For this purpose, the housing can at least partly be designed lattice-shaped or grid-shaped. The housing encloses an inner space or interior which is divided into the plurality of separated housing rooms. The number of housing rooms is arbitrary. For example, there are provided four housing rooms. The housing rooms can receive all the same sorbent or the same sorbents or different sorbents. The housing rooms being "separated" in this context means that the sorbent or the sorbents cannot move from one housing room into another.

The non-woven fiber material, the layers are made of can be a fleece material. For example, the non-woven fiber material is a spunbonded fiber material. The number of layers is arbitrary. However, there are provided at least two layers. The layers can all be made of the same non-woven fiber material. However, the layers can also be made of different non-woven fiber materials. The granulate portion being "sandwiched" between at least two layers means that the granulate portion is arranged between the layers. The layers prevent the sorbent or the sorbents from falling out of the housing.

The granulate portion can be a bulk material in the form of the sorbent or different sorbents that is poured into the housing rooms to form a granulate portion in each housing room. Each housing room receives a separate granulate portion. Each granulate portion can comprise a first sorbent, a second sorbent or the first sorbent as well as the second sorbent. However, the number of sorbents is arbitrary. In the case that the granulate portions comprise both, the first sorbent and the second sorbent, the sorbents can be mixed. Alternatively, the sorbents can be arranged in layers within the respective granulate portion.

Due to the separated housing rooms, it is possible to provide different types of sorbents in different housing rooms. This allows the sorption filter cartridge to be adapted to different applications.

In embodiments, the housing comprises a flexible grid that covers the granulate portions, wherein the grid can be deformed by means of a mounting frame of the sorption filter element when mounting the sorption filter cartridge to the mounting frame, and wherein the granulate portions can be compressed by means of the deformed grid. Preferably, the grid closes or covers the housing rooms. In particular, the grid is part of a housing cover of the housing. The grid can have support struts for stiffening the grid. Compressing the granulate portions increases the density of the granulate portions and thus increases the efficiency of the sorption filter cartridge when filtering air.

In embodiments, the housing comprises a housing body and a housing cover for closing the housing body, wherein the housing cover is snapped into the housing body for connecting the housing cover to the housing body. "Snapped" in this context means that the housing cover is at least partially deformed to engage with the housing body in a form-locking way. The housing body and the housing cover are preferably injection molded plastic parts. The housing body is preferably box-shaped and comprises a mesh-shaped or grid-shaped bottom. The bottom is fluid permeable. That means that a fluid, in particular air, can be guided through the bottom. One of the afore-mentioned layers lies against the bottom in each housing room. Preferably, the housing cover comprises a sealing lip.

In embodiments, the housing cover comprises flexible snap hooks that engage with a frame section of the housing body for connecting the housing cover to the housing body. The snap hooks can be elastically deformed. When pressing the housing cover on the housing body, the snap hooks engage with the frame section and snap into or behind the frame section. By deforming the snap hooks, the housing cover can be separated from the housing body.

In embodiments, the housing body comprises a plurality of separating walls that separate the housing rooms from each other. The number of separating walls is arbitrary. For example, there are provided three separating walls that separate four housing rooms from each other. The separating walls can be an integral part of the housing body. Alternatively, the separating walls and the housing body can be separate parts. In this case, the separating walls can be welded or glued to the housing body. There can also be provided guidance tracks into which the separating walls are pushed to attach the separating walls to the housing body.

In embodiments, the housing comprises flexible snap hooks that engage with snap hook receivers of the mounting frame for mounting the sorption filter cartridge to the mounting frame. Preferably, the snap hooks are provided at the housing body, in particular at the frame section of the housing body. The number of snap hooks is arbitrary. For example, there are provided four snap hooks per sorption filter cartridge. The number of snap hook receivers is arbitrary. The number of snap hooks must not be the same as the number of snap hook receivers. This means that not every snap hook engages with one snap hook receiver. The snap hook receivers are provided at cartridge receiving sections of the mounting frame. By deforming the snap hooks, the sorption filter cartridge can be disassembled from the mounting frame.

In embodiments, the housing comprises guidance pins that engage with guidance tracks of the mounting frame for mounting the sorption filter cartridge to the mounting frame. The guidance tracks are provided at the cartridge receiving sections of the mounting frame. The guidance tracks guide the sorption filter cartridge when being mounted to the mounting frame. For example, the housing comprises four guidance pins. Preferably, the guidance pins are provided at the housing body, in particular at the frame section of the housing body.

In embodiments, the granulate portions are sandwiched between first layers of non-woven fiber material and second layers of non-woven fiber material, wherein the second layers are sandwiched between the granulate portions and third layers of non-woven fiber material. The number of layers is arbitrary. There can be provided more than three layers of non-woven fiber material. For example, the first layer and the second layer can be made of the same non-woven fiber material. The third layer can be made of a different non-woven fiber material. However, all layers can also be made of the same non-woven fiber material.

Furthermore, a sorption filter element is provided. The sorption filter element comprises a mounting frame and at least one sorption filter cartridge as explained before, wherein the at least one sorption filter cartridge is releasably mounted to the mounting frame. Preferably, the sorption filter element comprises a first sorption filter cartridge and a second sorption filter cartridge. "Releasably mounted" in this context means that the sorption filter cartridges can be mounted to and demounted from the mounting frame without damaging the sorption filter cartridges and/or the mounting frame. Preferably, the mounting frame is an injection molded plastic part.

In embodiments, the mounting frame comprises a first cartridge receiving section for receiving a first sorption filter cartridge and a second cartridge receiving section for receiving a second sorption filter cartridge. Preferably, the cartridge receiving sections are designed identical. That means that the first sorption filter cartridge can be received in the second cartridge receiving section and the second sorption filter cartridge can be received in the first cartridge receiving section and vice versa. The afore-mentioned sealing lip of the housing cover lies against a sealing surface of the respective cartridge receiving section.

In embodiments, the first sorption filter cartridge and the second sorption filter cartridge are arranged in a V-configuration within their cartridge receiving sections. "V-configuration" in this context means that the sorption filter cartridges are positioned inclined to each other and thus form a V-shape.

In embodiments, each cartridge receiving section comprises snap hook receivers, wherein the housings of the sorption filter cartridges comprise flexible snap hooks that engage with the snap hook receivers for mounting the sorption filter cartridges to the cartridge receiving sections. The snap hooks are provided at the housing body, in particular at the frame section of the housing body. The snap hooks are deformed to engage with the corresponding snap hook receivers. By deforming the snap hooks again, the sorption filter cartridges can be removed from the cartridge receiving sections without any damage. Thus, the sorption filter cartridges can be replaced.

In embodiments, each cartridge receiving section comprises guidance tracks, wherein the housings of the sorption filter cartridges comprise guidance pins that engage with the guidance tracks for mounting the sorption filter cartridges to the cartridge receiving sections. The guidance pins are provided at the housing body, in particular at the frame section of the housing body. Preferably, each cartridge receiving section has two sidewalls, wherein each side wall comprises a lower guidance track and an upper guidance track. The guidance tracks and the guidance pins guide the sorption filter cartridges when being mounted in or at the cartridge receiving sections.

In embodiments, the housings of the sorption filter cartridges comprise flexible grids that cover the granulate portions, wherein the mounting frame deforms the grids when mounting the sorption filter cartridges to the mounting frame, and wherein the granulate portions are compressed by means of the deformed grids. In particular, the grids are part of the covers of the housings. The grids can have support struts for stiffening the grids.

In embodiments, the mounting frame comprises protrusions that deform the grids, wherein the protrusions protrude into the cartridge receiving sections. The protrusions lie against the grids when the sorption filter cartridges are received within the cartridge receiving sections. The number of protrusions is arbitrary. For example, each cartridge receiving section has four protrusions.

### Brief Description of Drawings

The figures show:
Fig. 1 is a schematic view of one embodiment of a motor vehicle;
Fig. 2 is a schematic view of one embodiment of a mechanism for the motor vehicle according to Fig. 1;
Fig. 3 is a schematic perspective view of one embodiment of a sorption filter element for the mechanism according to Fig. 2;
Fig. 4 is a further schematic perspective view of the sorption filter element according to Fig. 3;
Fig. 5 is a schematic perspective exploded view of the sorption filter element according to Fig. 3;
Fig. 6 is a further schematic perspective view of the sorption filter element according to Fig. 3;
Fig. 7 is a schematic perspective detail view of the sorption filter element according to Fig. 3;
Fig. 8 is a cross-sectional view of the sorption filter element according to Fig. 3;
Fig. 9 is a further schematic perspective view of the sorption filter element according to Fig. 3;
Fig. 10 is a further schematic perspective view of the sorption filter element according to Fig. 3;
Fig. 11 is a schematic perspective view of one embodiment of a sorption filter cartridge for the sorption filter element according to Fig. 3;
Fig. 12 is a cross-sectional view of the sorption filter cartridge according to Fig. 11; and
Fig. 13 is a schematic perspective exploded view of the sorption filter cartridge according to Fig. 11.

In the figures, identical or functionally identical elements have been given the same reference signs unless otherwise indicated.

### Detailed Description

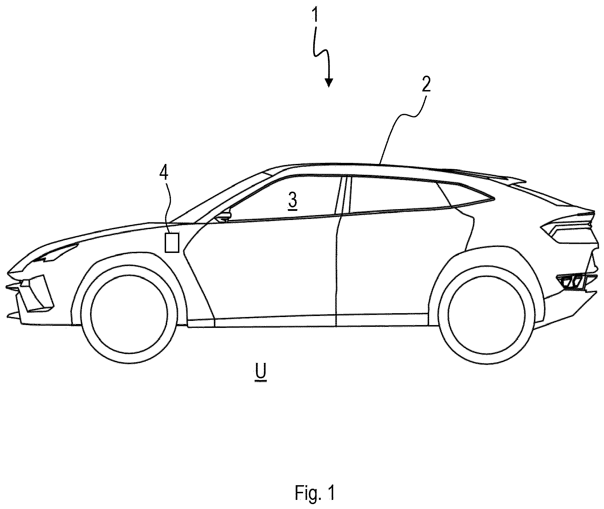

Fig. 1 shows a schematic view of an embodiment of a motor vehicle 1. The motor vehicle 1 is preferably an electric vehicle or a hybrid vehicle. However, the motor vehicle 1 may also be driven by means of an internal combustion engine. The motor vehicle 1 comprises a body 2 which encloses an enclosed air volume 3. "Enclosed" in this context means that the body 2 defines boundaries or a geometric extension of the enclosed air volume 3. However, this does not necessarily mean that the enclosed air volume 3 cannot be in air exchange with an environment U of the motor vehicle 1.

The enclosed air volume 3 is an interior or passenger compartment of the motor vehicle 1. However, the enclosed air volume 3 may also be associated with a watercraft, a construction machine or a construction vehicle, a rail vehicle, an agricultural machine or an agricultural vehicle, or an aircraft. However, the enclosed air volume 3 may also be part of a building or a stationary machine.

In the following, however, it is assumed that the enclosed air volume 3 is the passenger compartment of the motor vehicle 1. Therefore, the enclosed air volume 3 is hereinafter referred to as the passenger compartment. The passenger compartment 3 can be air conditioned by means of a heating, ventilation, and air conditioning (HVAC) system 4. To extend a range of such an electrically driven motor vehicle 1, it is desirable to save as much energy as possible. With reference to the HVAC system 4, this means that it should draw in as little fresh air as possible from the environment U of the motor vehicle 1 to air condition the passenger compartment 3.

However, when recirculated air taken in the passenger compartment 3 is used to air condition the passenger compartment 3, water (H2O) contained in the exhaled air of occupants or passengers may accumulate in the passenger compartment 3, which may cause windows, for example a windshield or side windows, of the motor vehicle 1 to fog. This must be avoided or at least reduced with regard to safety aspects. Furthermore, carbon dioxide (CO2) contained in the exhaled air can also accumulate in the passenger compartment 3. This can lead to concentration problems or even health impairments for the occupants. This, too, must be prevented or at least reduced with regard to both safety and health aspects.

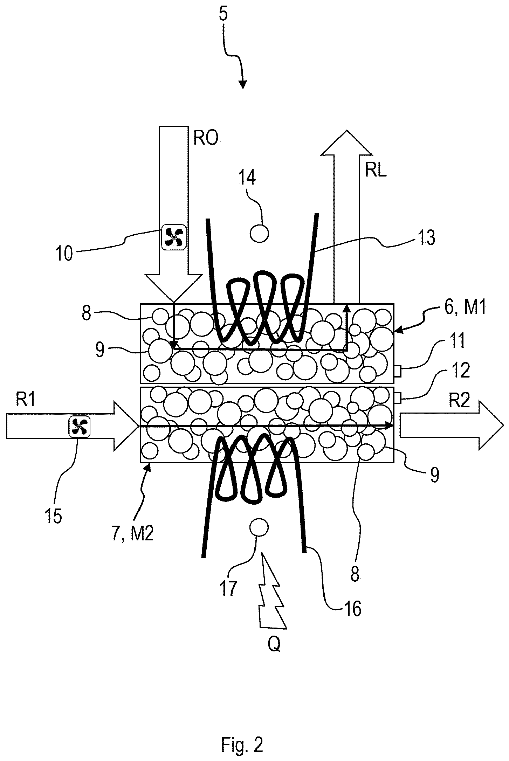

Fig. 2 shows a schematic view of an embodiment of a mechanism 5 for the combined reduction of CO2 and H2O, in particular water vapor, within the passenger compartment 3. The mechanism 5 is part of the HVAC system 4. With the aid of the mechanism 5, the previously mentioned disadvantages can be prevented or their effect at least reduced. In addition, the mechanism 5 can also be used to prevent impurities from the environment U from entering the passenger compartment 3, since the preparation of the circulating air means that the intake of ambient air can be largely dispensed with.

The mechanism 5 comprises a first sorption filter device 6 and a second sorption filter device 7. "Sorption" is a collective term for processes that lead to an accumulation of a substance within a phase or at an interface between two phases. The enrichment within a phase is more precisely called absorption, and that at the interface adsorption. This means that the sorption filter devices 6, 7 are suitable for adsorbing and/or absorbing substances such as CO2 and H2O, but also nitrogen oxides (NOX) and/or volatile organic compounds (VOCs). Examples of volatile organic compounds are higher hydrocarbons. The sorption filter devices 6, 7 may also be suitable for adsorbing and/or absorbing sulfur dioxide (SO2). Preferably, however, the sorption filter devices 6, 7 are pure adsorbing units or may be designated as such.

The sorption filter devices 6, 7 are preferably interchangeable and, as will be explained further below, can be operated alternately in a sorption mode M1 and in a desorption mode M2. The sorption filter devices 6, 7 are cartridge-shaped and may be referred to as cartridges or sorption filter elements. The sorption mode M1 may also be referred to as the adsorption mode. The desorption mode M2 may also be referred to as regeneration mode. That is, the first sorption filter device 6 is in the sorption mode M1 when the second sorption filter device 7 is in the desorption mode M2 and vice versa. Thus, both sorption filter devices 6, 7 are never in the same mode M1, M2 at the same time. Preferably, the sorption filter devices 6, 7 each have a cartridge shape so that they can be easily exchanged.

Each sorption filter device 6, 7 comprises a first sorbent 8 and a second sorbent 9. Preferably, the sorbents 8, 9 are adsorbents or can be designated as such. For example, the first sorbent 8 is suitable for adsorbing CO2. Accordingly, the second sorbent 9 may be suitable to adsorb H2O. The two sorbents 8, 9 may thus remove H2O and CO2 from the passenger compartment 3. The first sorbent 8 is illustrated with small circles. The second sorbent 9 is illustrated with large circles. Other sorbents may also be provided, suitable for sorbing NOX or VOCs, for example. Thus, any number of different sorbents 8, 9 can be provided for processing the circulating air in the passenger compartment 3.

For example, in addition to the sorbents 8, 9, at least one further sorbent or also several further sorbents (not shown) are provided which are suitable for removing fine particles, NOx and/or VOCs from raw air RO. The further sorbents may be introduced between two carrier layers, in particular carrier layers made of a non-woven fabric. Alternatively, the sorbents 8, 9 and the further sorbents may be mixed together. The further sorbents may comprise activated carbon which, in particular in the form of a bulk, is preferably introduced between the two carrier layers. The further sorbent or sorbents may be mixed with the first sorbent 8 and/or with the second sorbent 9 to build up one or more mixed bulk layers.

Furthermore, the sorption filter devices 6, 7 can also be suitable for removing allergens, bacteria and/or viruses from the raw air RO in addition to CO2 and H2O. This can be done by a functional coating of carrier materials, for example nonwovens, or by a functional coating of the sorbents 8, 9. Furthermore, the sorption filter devices 6, 7 can have at least one fragrance component from a comfort aspect.

The sorbents 8, 9 can each be in the form of spherical granules. Preferably, the sorbents 8, 9 are fixed to a carrier material or are fixed with the aid of a carrier material. The sorption filter devices 6, 7 can each have a cylindrical, in particular a hollow-cylindrical, a pie-shaped or a rectangular geometry. By a "pie-shaped" geometry is meant in particular a flat circular-cylindrical geometry.

In Fig. 2, the first sorption filter device 6 is in the previously mentioned sorption mode M1. The second sorption filter device 7 is in the desorption mode M2. In the sorption mode M1, raw air RO loaded with CO2 and H2O from the passenger compartment 3 is fed to the first sorption filter device 6. A first blower 10 may be provided for this purpose. The raw air RO is passed through the first sorption filter device 6 at least in sections, with the sorbents 8, 9 purifying the raw air RO of CO2 and H2O. The purified raw air RO is fed back to the passenger compartment 3 as clean air RL.

The first sorption filter device 6 can have a temperature sensor 11. However, the first sorption filter device 6 can comprise a plurality of temperature sensors 11. For example, there can be provided two temperature sensors 11. The second sorption filter device 7 can also have a temperature sensor 12. However, the second sorption filter device 7 can comprise a plurality of temperature sensors 12. For example, there can be provided two temperature sensors 12.

An optional first heater 13 is assigned to the first sorption filter device 6, with the aid of which heat Q can be supplied to the sorbents 8, 9. In the sorption mode M1, the first heater 13 is inactive, so that it does not supply heat Q to the first sorption filter device 6. The first heater 13 can be a heating wire passed through the first sorption filter device 6, which is energized to introduce heat Q and thus heats the sorbents 8, 9. However, heat Q may also be introduced by any other means. For example, heat Q may be waste heat from an electric motor used to drive the motor vehicle 1. Heat Q may also be waste heat from a conventional internal combustion engine, a battery cooling system, or a fuel cell cooling circuit. The first heater 13 may also be a heat exchanger or comprise a heat exchanger. A temperature sensor 14 can be assigned to the first heater 13.

In the desorption mode M2, unloaded regeneration air R1 is supplied to the second sorption filter device 7 being loaded with CO2 and H2O. A second blower 15 can be used for this purpose. By the fact that the unloaded regeneration air R1 is "unloaded" with CO2 and H2O, it is to be understood that the unloaded regeneration air R1 can absorb CO2 and H2O stored in the second sorption filter device 7. That is, the unloaded regeneration air R1 may also have some content of CO2 and H2O. However, the unloaded regeneration air R1 is not saturated with CO2 and H2O. The unloaded regeneration air R1 can be taken from the passenger compartment 3 or the environment U, for example.

Furthermore, an optional second heater 16 is provided, by means of which the second sorption filter device 7 is heated in the desorption mode M2 and thus heat Q is introduced into the second sorption filter device 7. The first heater 13 and the second heater 16 are preferably of identical construction and are operated alternately. As previously mentioned, heat Q may also be supplied, for example, in the form of waste heat from an electric motor. However, as also mentioned previously, heat Q may also be waste heat from a conventional internal combustion engine, a battery cooling system or a fuel cell cooling circuit. The second heater 16 may also be a heat exchanger or comprise a heat exchanger. A temperature sensor 17 can be assigned to the first heater 13.

When the sorbents 8, 9 are heated in the desorption mode M2 of the second sorption filter device 7, they release CO2 and H2O to the unloaded regeneration air R1. In other words, CO2 and H2O are desorbed. A temperature above 55 °C is preferably required for desorption. The unloaded regeneration air R1 is passed through the second sorption filter device 7, absorbs CO2 and H2O there and is discharged from the second sorption filter device 7 as loaded regeneration air R2. In particular, the loaded regeneration air R2 is supplied to the environment U.

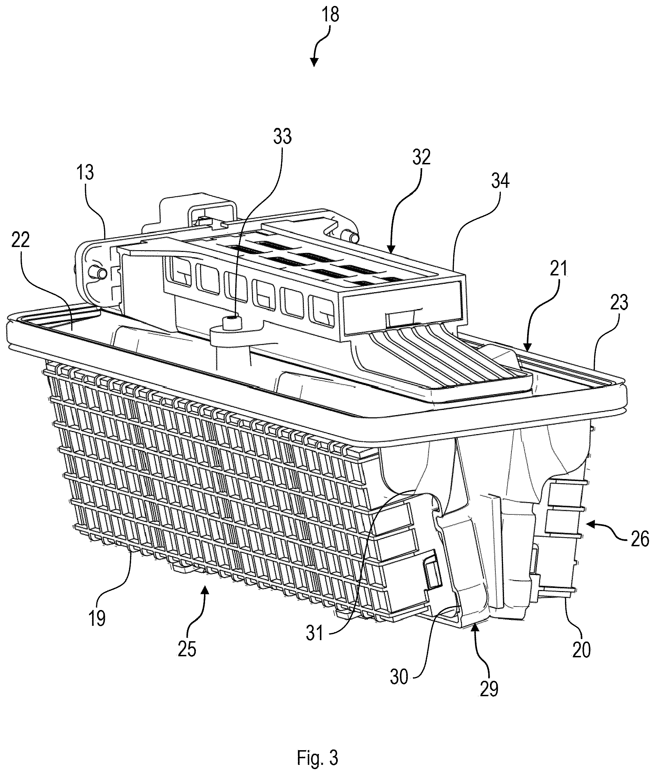

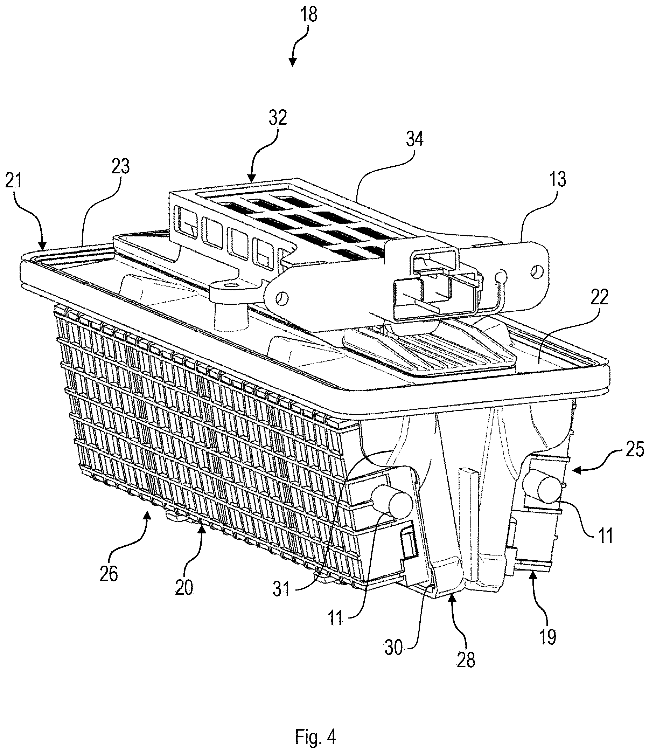

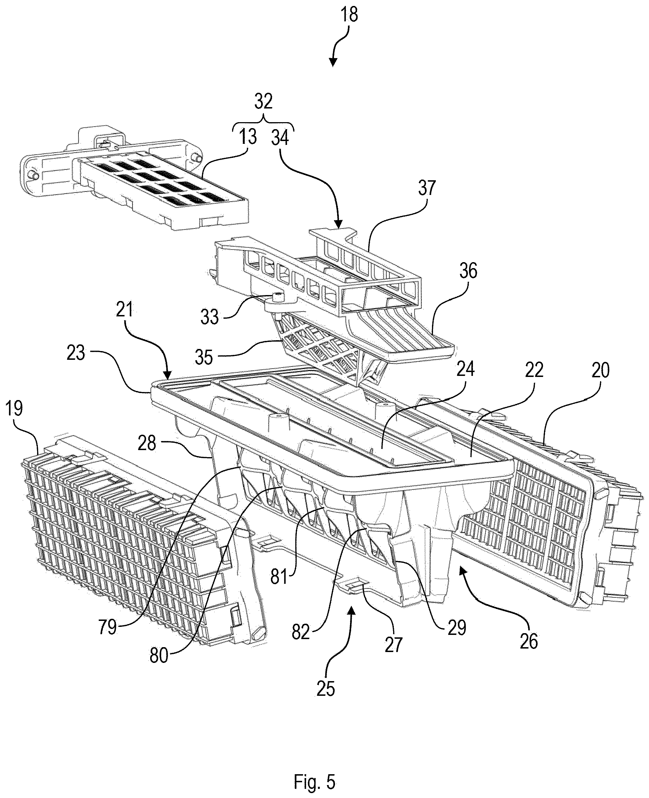

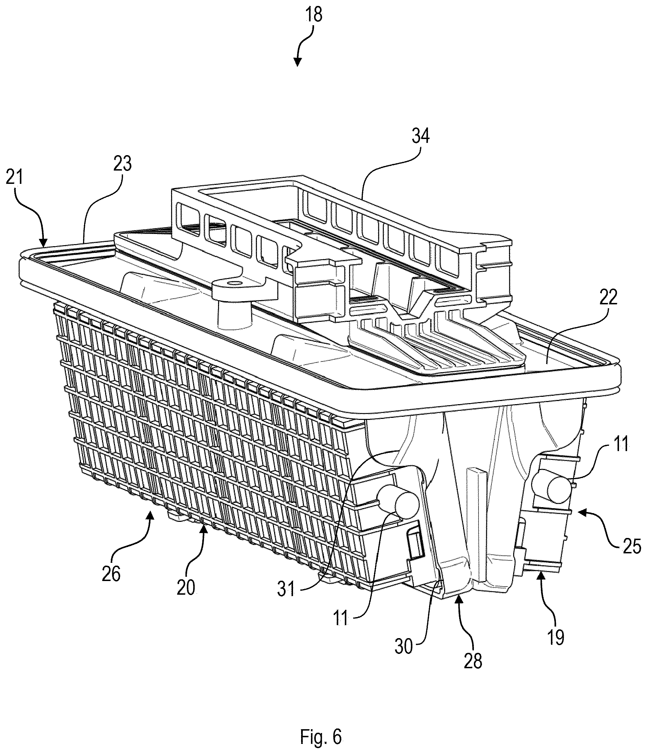

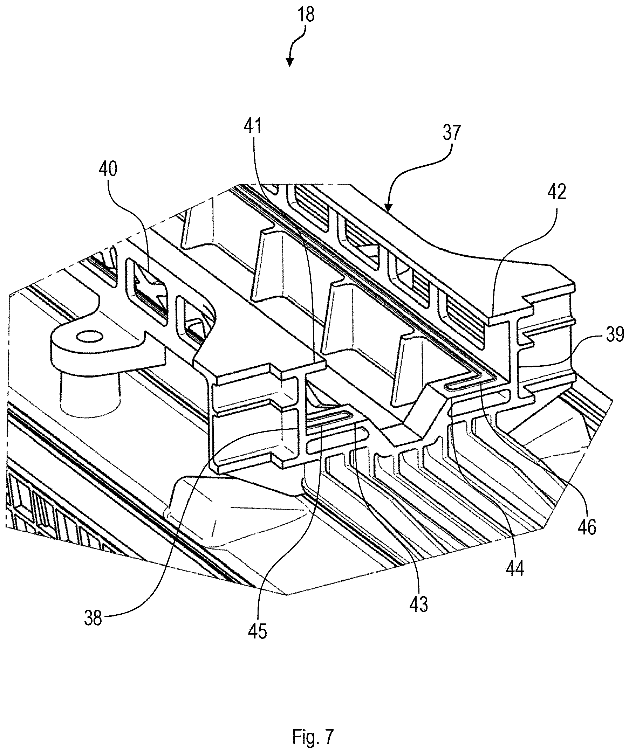

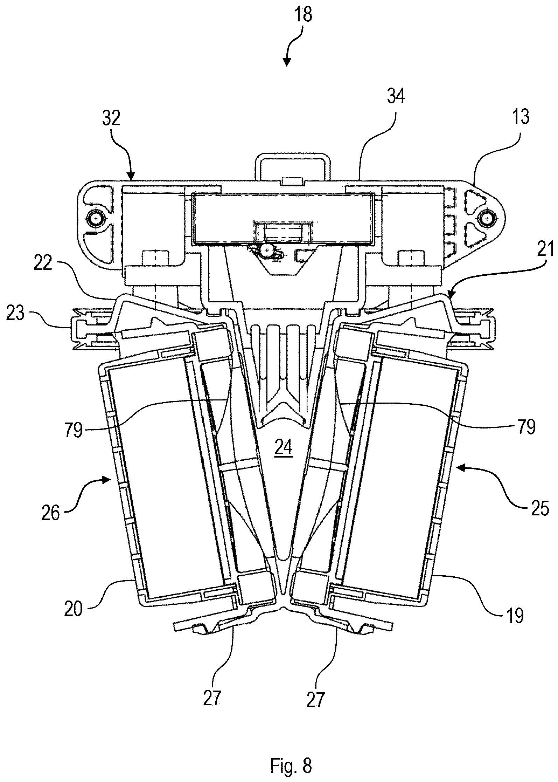

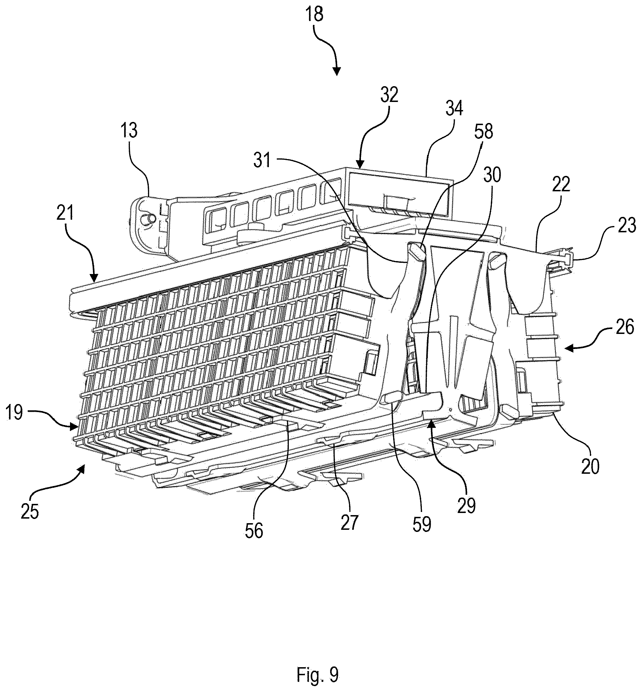

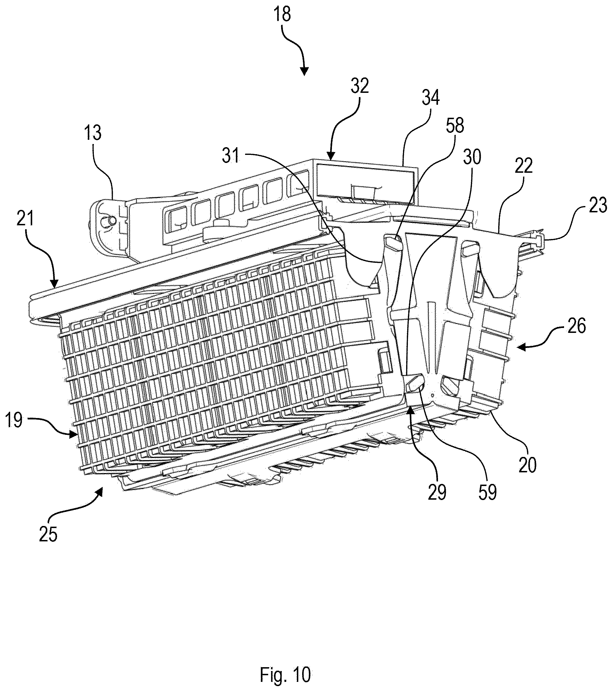

Fig. 3 shows a schematic perspective view of one embodiment of a sorption filter element 18. Fig. 4 shows a further schematic perspective view of the sorption filter element 18. Fig. 5 shows a schematic perspective exploded view of the sorption filter element 18. Fig. 6 shows a further schematic perspective view of the sorption filter element 18. Fig. 7 shows a schematic perspective detail view of the sorption filter element 18. Fig. 8 shows a cross-sectional view of of the sorption filter element 18. Fig. 9 shows a further schematic perspective view of the sorption filter element 18. Fig. 10 shows a further schematic perspective view of the sorption filter element 18. In the following, Figs. 3 to 10 will be referred to at the same time.

The sorption filter devices 6, 7 are designed identical. Each sorption filter device 6, 7 comprises a sorption filter element 18. In the following, only the first sorption filter device 6 will be referred to. However, all explanations concerning the first sorption filter device 6 can be applied to the second sorption filter device 7 and vice versa.

The first sorption filter device 6 comprises a housing (not shown) in which the sorption filter element 18 is received. The sorption filter element 18 can be removed from the housing and put again into the housing. The sorption filter element 18 comprises a first sorption filter cartridge 19 and a second sorption filter cartridge 20. The sorption filter cartridges 19, 20 can be named sorption boxes, in particular adsorption boxes.

The sorption filter cartridges 19, 20 are removably attached to a mounting frame 21 of the sorption filter element 18. The mounting frame 21 preferably is an injection molded plastic part. The mounting frame 21 comprises a plate-shaped cover section 22. The cover section 22 carries a sealing lip 23. The sealing lip 23 is made of a flexible material like a thermoplastic elastomere (TPE), in particular a thermoplastic polyurethane (TPU). The material of the sealing lip 23 can be foamed. The sealing lip 23 seals against the housing of the first sorption filter device 6.

The mounting frame 21 comprises a V-shaped inner receiving section 24 (Figs. 5 and 8). Additionally, the mounting frame 21 comprises two cartridge receiving sections 25, 26 for receiving the sorption filter cartridges 19, 20. A first cartrige receiving section 25 and a second cartridge receiving section 26 are provided. Each sorption filter cartridge 19, 20 is assigned to one of the cartridge receiving sections 25, 26. The sorption filter cartridges 19, 20 are exchangeable and can be removed from the cartridge receiving sections 25, 26. Each cartridge receiving section 25, 26 comprises a plurality of snap hook receivers 27 of which only one is provided with a reference sign in Figs. 5, 8 and 9. For example, each cartridge receiving section 25, 26 comprises two snap hook receivers 27.

Each cartridge receiving section 25, 26 comprises a first side wall 28 and a second side wall 29. The sorption filter cartridges 19, 20 are arranged between these side walls 28, 29. Each side wall 28, 29 comprises a lower guidance track 30 and an upper guidance track 31. The guidance tracks 30, 31 are curved. By means of the guidance tracks 30, 31 and the snap hook receivers 27, the sorption filter cartridges 19, 20 can be mounted to the mounting frame 21 and dismantled from the mounting frame 21 as will be explained later.

An air heating and guidance mechanism 32 is attached to the mounting frame 21. For this purpose, fixing elements 33 can be provided. The fixing elements 33 can be screws. The air heating and guidance mechanism 32 comprises a first heater 13 as explained before and a heater carrier and air guidance element 34. The heater carrier and air guidance element 34 and the first heater 13 together form the air heating and guidance mechanism 32. The first heater 13 can be removed from the heater carrier and air guidance element 34 an attached to it again.

The heater carrier and air guidance element 34 is preferably an injection molded plastic part. The heater carrier and air guidance element 34 comprises an air diffusor 35 (Fig. 5) which is received in the inner receiving section 24 of the mounting frame 21. The air diffusor 35 is fluid permeable. Regeneration air R1, R2, clean air RL and/or raw air RO can be guided through the air diffusor 35. The air diffusor 35 distributes the regeneration air R1, R2, the clean air RL and/or the raw air RO to the sorption filter cartridges 19, 20. The air diffusor 35 protrudes from a basic section 36 of the heater carrier and air guidance element 34 toward the mounting frame 21.

The heater carrier and air guidance element 34 comprises a heater receiving section 37 which is shown in detail in Fig. 7. The heater receiving section 37 receives the first heater 13. The heater receiving section 37 is box-shaped. The first heater 13 can be pushed into and pulled out of the heater receiving section 37 like a drawer. The heater receiving section 37 comprises two side walls 38, 39 between which the first heater 13 is placed. The side walls 38, 39 have a plurality of breakthroughs 40 of which only one is provided with a reference sign in Fig. 7.

A top wall 41, 42 protrudes from each side wall 38, 39. There is provided a gap between the two top walls 41, 42. The heater receiving section 37 has two bottom walls 43, 44. There is provided a gap between the two bottom walls 43, 44. Each bottom wall 43, 44 has a guidance track 45, 46. When pushing the first heater 13 into the heater receiving section 37, the guidance tracks 45, 46 lift the first heater 13 up against the top walls 41, 42 so that the first heater 13 is secured against falling out of the heater receiving section 37.

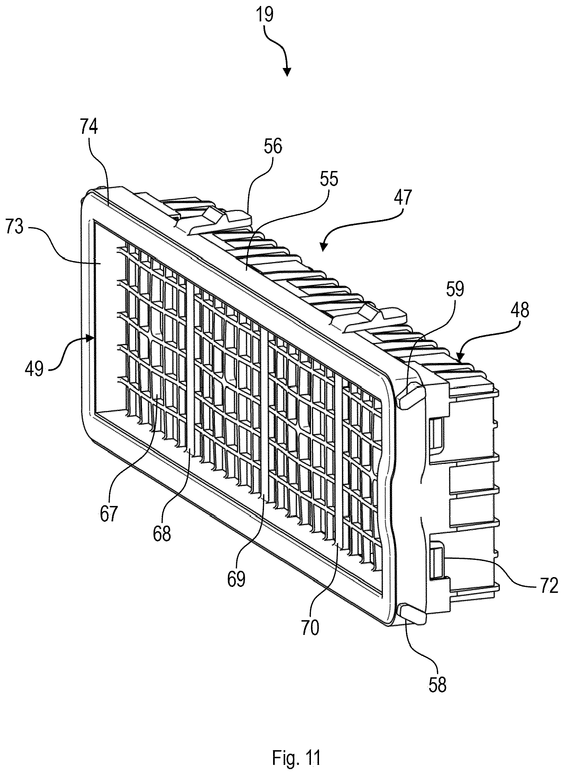

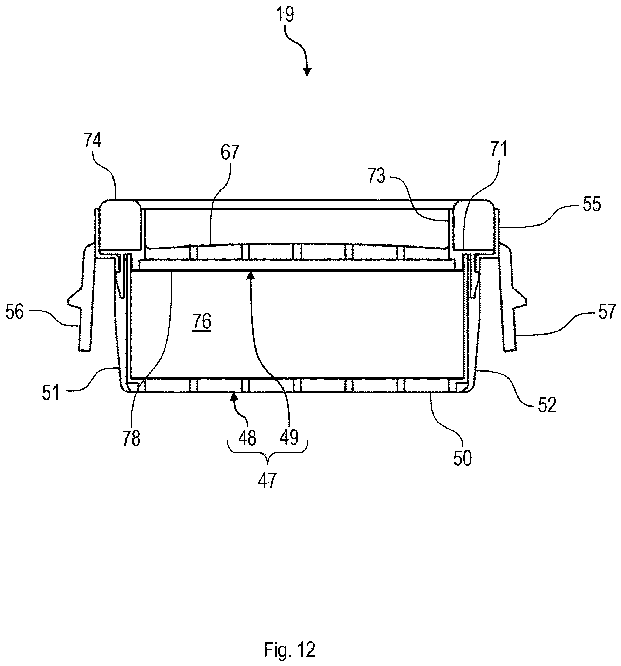

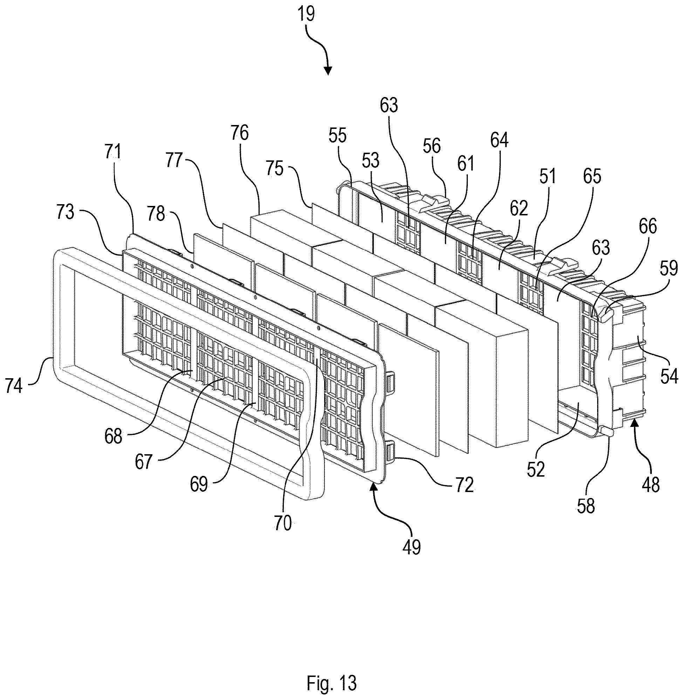

Fig. 11 shows a schematic perspective view of one embodiment of a sorption filter cartridge 19. Fig. 12 shows a cross-sectional view of of the sorption filter cartridge 19. Fig. 13 shows a schematic perspective exploded view of the sorption filter cartridge 19. In the following, Figs. 11 to 13 will be referred to at the same time.

The sorption filter cartridges 19, 20 are designed identical. In the following, only the first sorption filter cartridge 19 will be referred to. However, all explanations concerning the first sorption filter cartridge 19 can be applied to the second sorption filter cartridge 20 and vice versa. In the following, the first sorption filter cartridge 19 is generally named sorption filter cartridge.

The sorption filter cartridge 19 comprises a housing 47. The housing 47 has a housing body 48 and a housing cover 49 that is attached to the housing body 48. The housing body 48 and the housing cover 49 are preferably injection molded plastic parts. The housing body 48 is box-shaped and comprises a mesh-shaped or grid-shaped bottom 50. The bottom 50 is fluid permeable. That means that regeneration air R1, R2, clean air RL and/or raw air RO can be guided through the bottom 50. The temperature sensor 11 can be integrated into the sorption filter cartridge 19.

The housing body 48 further comprises a front wall 51, a rear wall 52 and two side walls 53, 54. The front wall 51 and the rear wall 52 are arranged parallel to each other and perpendicular to the side walls 53, 54. The side walls 53, 54 are arranged parallel to each other. The walls 51, 52, 53, 54 are connected to the bottom 50. A rectangular frame section 55 runs around the housing body 48. The walls 51, 52, 53, 54 are connected to the frame section 55.

Snap hooks 56, 57 (Fig. 12) are provided at the frame section 55. In particular, the snap hooks 56, 57 are provided at sections of the frame section 55 that run along the walls 51, 52. In other words, the snap hooks 56, 57 are assigned to the front wall 51 and to the rear wall 52. The number of snap hooks 56, 57 is arbitrary. In particular, the number of the snap hooks 56, 57 is not the same as the number of the snap hook receivers 27 of the cartridge receiving sections 25, 26 of the mounting frame 21. For example, there are provided four snap hooks 56, 57 per sorption filter cartridge 19 and two snap hook receivers 27 per cartridge receiving section 25, 26. Some of the snap hooks 56, 57 engage with the snap hook receivers 27 to attach the sorption filter cartridge 19 to the mounting frame 21.

Additionally to the snap hooks 56, 57, there are provided guidance pins 58, 59 at the frame section 55. In particular, the guidance pins 58, 59 are provided at sections of the frame section 55 that run along the side walls 53, 54. In other words, the guidance pins 58, 59 are assigned to the side walls 53, 54. The number of guidance pins 58, 59 is arbitrary. In particular, the number of the guidance pins 58, 59 is the same as the number of the guidance tracks 30, 31 of the cartridge receiving sections 25, 26 of the mounting frame 21. For example, there are provided four guidance pins 58, 59 per sorption filter cartridge 19 and four guidance tracks 30, 31 per cartridge receiving section 25, 26. The guidance pins 58, 59 engage with the guidance tracks 30, 31 to attach the sorption filter cartridge 19 to the mounting frame 21. The guidance pins 58, 59 can be designed cuboid-shaped.

The housing body 48 encloses a plurality of separating walls 60, 61, 62. The number of separating walls 60, 61, 62 is arbitrary. For example, there are provided three separating walls 60, 61, 62. The separating walls 60, 61, 62 can be part of the housing body 48. Alternatively, the separating walls 60, 61, 62 and the housing body 48 can be separate parts. In this case, the separating walls 60, 61, 62 can be welded or glued to the housing body 48. There can also be provided guidance tracks into which the separating walls 60, 61, 62 are pushed to attach the separating walls 60, 61, 62 to the housing body 48. The separating walls 60, 61, 62 separate a plurality of separate housing rooms 63, 64, 65, 66 from each other.

The housing cover 49 comprises a flexible grid 67 that is fluid permeable. That means that regeneration air R1, R2, clean air RL and/or raw air RO can be guided through the grid 67. The grid 67 is supported by means of support struts 68, 69, 70. The number of support struts 68, 69, 70 is arbitrary. For example, there are provided three support struts 68, 69, 70.

A base section 71 runs around the grid 67. The base section 71 is rectangular. The base section 71 encloses the grid 67. There is provided a plurality of snap hooks 72 at the base section 71. The number of snap hooks 72 is arbitrary. For example, there can be provided twelve snap hooks 72, wherein two snap hooks 72 are assigned to each side wall 53, 54 of the housing body 48, four snap hooks 72 are assigned to the front wall 51 and four snap hooks 72 are assigned to the rear wall 52. The snap hooks 72 engage with the frame section 55 to attach the housing cover 49 to the housing body 48.

A frame section 73 protrudes from the base section 71. The frame section 73 is rectangular and runs around the grid 67. Thus, the frame section 73 encloses the grid 67. The frame section 73 is positioned within the frame section 55 of the housing body 48. In other words, the frame section 55 runs around the frame section 73.

A sealing lip 74 for sealing the sorption filter cartridge 19 against the mounting frame 21 is arranged between the frame sections 55, 73. The sealing lip 74 can be attached to the base section 71, the frame section 55 and/or the frame section 73. The sealing lip 74 is made of a flexible material like a thermoplastic elastomere (TPE), in particular a thermoplastic polyurethane (TPU). The material of the sealing lip 74 can be foamed. The sealing lip 74 can be made from a liquid raw material that is cast into a gap being provided between the two frame sections 55, 73. Alternatively, the sealing lip 74 can be glued to the base section 71, the frame section 55 and/or the frame section 73.

Each housing room 63, 64, 65, 66 receives a first layer 75 of non-woven fiber material. The non-woven fiber material can be a fleece material. The first layers 75 lay against the bottom 50 of the housing body 48. Preferably, all the first layers 75 are made of the same non-woven fiber material. Alternatively, the first layers 75 can be made of different non-woven fiber materials.

The first layers 75 are covered by granulate portions 76. Each housing room 63, 64, 65, 66 receives a separate granulate portion 76. Each granulate portion 76 can comprise the first sorbent 8, the second sorbent 9 or the first sorbent 8 as well as the second sorbent 9. In the case that the granulate portions 76 comprise both, the first sorbent 8 and the second sorbent 9, the sorbents 8, 9 can be mixed. Alternatively, the sorbents 8, 9 can be arranged in layers within the respective granulate portion 76. The non-woven fiber material of the first layers 75 has a mesh size that prevents granulate particles of the sorbents 8, 9 from falling through the first layers 75.

The granulate portions 76 are each covered by a second layer 77 of non-woven fiber material. Each housing room 63, 64, 65, 66 receives a second layer 77 that covers the respective granulate portion 76. Thus, each granulate portion 76 is sandwiched between two layers 75, 77. The non-woven fiber material of the second layers 77 can be a fleece material. For example, the non-woven fiber material of the second layers 77 is a spunbonded fiber material. However, every other suitable material can be used for the second layers 77. The non-woven fiber material of the second layers 77 has a mesh size that prevents granulate particles of the sorbents 8, 9 from falling through the second layers 77. The layers 75, 77 can be made of the same non-woven fiber material.

Furthermore, each housing room 63, 64, 65, 66 receives a third layer 78 of non-woven fiber material that covers the second layer 77. Thus, each second layer 77 is sandwiched between a granulate portion 76 and a third layer 78. The non-woven fiber material of the third layer 78 can be a fleece material. For example, the third layer 78 is made from another non-woven fiber material than the layers 75, 77. The third layers 78 can be attached to the housing cover 49, in particular to the grid 67.

To assemble the sorption filter cartridge 19, the first layers 75 are placed in the housing rooms 63, 64, 65, 66 in such a way that the first layers 75 cover the bottom 50 of the housing body 48. Then, the granulate portions 76 are placed on the first layers 75 this can be done by pouring the sorbents 8, 9 in form of bulk material into the housing rooms 63, 64, 65, 66. After placing the granulate portions 76 in the housing rooms 63, 64, 65, 66, the granulate portions 76 are covered with the second layers 77 and the second layers 77 are covered with the third layers 78.

Then, the housing cover 49 is attached to the housing body 48. When assembling the housing cover 49 and the housing body 48, the snap hooks 72 are elastically deformed and engage with the frame section 55 of the housing body 48. The snap hooks 72 snap behind the frame section 55 to connect the housing body 48 and the housing cover 49.

After connecting the housing cover 49 to the housing body 48, the sealing lip 74 is mounted. As mentioned before, the sealing lip 74 can be made from a liquid raw material that is cast into the gap being provided between the two frame sections 55, 73. Alternatively, the sealing lip 74 can be glued to the base section 71, the frame section 55 and/or the frame section 73.

The mounting of the sorption filter cartridge 19 to the mounting frame 21 is explained with reference to Figs. 9 and 10. As shown in Fig. 9, the two guidance pins 58 of the sorption filter cartridge 19 are inserted into the upper guidance tracks 31 that are provided on the side walls 28, 29 of the mounting frame 21. Alternatively, the two guidance pins 59 of the sorption filter cartridge 19 could be inserted into the upper guidance tracks 31. An erroneous assembly of the sorption filter cartridge 19 is not possible (Poka Yoke).

Then, the sorption filter cartridge 19 is rotated around its guidance pins 58 until the two guidance pins 59 reach the lower guidance tracks 30 that are provided on the side walls 28, 29 of the mounting frame 21. When doing so, the snap hooks 56 of the sorption filter cartridge 19 are elastically deformed and snap into the snap hook receivers 27 of the mounting frame 21. The snap hooks 57 are not engaged. The sorption filter cartridge 19 is then removably attached to the mounting frame 21. The sealing lip 74 then lies against a sealing surface of the mounting frame 21. Each cartridge receiving section 25, 26 of the mounting frame 21 has a sealing surface of that kind. The second sorption filter cartridge 20 is mounted accordingly.

When mounting the sorption filter cartridges 19, 20 to the mounting frame 21, the grids 67 of the sorption filter cartridges 19, 20 are pressed down by means of protrusions 79, 80, 81, 82 (Figs. 5 and 8) protruding from the mounting frame 21 into the cartridge receiving sections 25, 26. Each cartridge receiving section 25, 26 has the same number of protrusions 79, 80, 81, 82. For example, there can be provided four protrusions 79, 80, 81, 82 per cartridge receiving section 25, 26. In this way, the granulate of the sorbents 8, 9 in the granulate portions 76 can compressed by means of the protrusions 79, 80, 81, 82.

In the sorption mode M1, raw air RO loaded with CO2 and H2O from the passenger compartment 3 is fed to the first sorption filter device 6. The raw air RO is passed through the first sorption filter device 6 and thus through the sorption filter element 18 with the two sorption filter cartridges 19, 20. The purified raw air RO is fed back to the passenger compartment 3 as clean air RL.

In the desorption mode M2, unloaded regeneration air R1 is supplied to the first sorption filter device 6. The unloaded regeneration air R1 passes the air heating and guidance mechanism 32 which applies heat Q to the unloaded regeneration air R1. The unloaded regeneration air R1 passes through the sorption filter element 18 with the two sorption filter cartridges 19, 20 and leaves the first sorption filter device 6 as loaded regeneration air R2. The same functionality applies to the second sorption filter device 7.

### Reference Numbers

- 1: Motor vehicle
- 2: Body
- 3: Volume/passenger compartment
- 4: HVAC system
- 5: Mechanism
- 6: Sorption filter device
- 7: Sorption filter device
- 8: Sorbent
- 9: Sorbent
- 10: Blower
- 11: Temperature sensor
- 12: Temperature sensor
- 13: Heater
- 14: Temperature sensor
- 15: Blower
- 16: Heater
- 17: Temperature sensor
- 18: Sorption filter element
- 19: Sorption filter cartridge
- 20: Sorption filter cartridge
- 21: Mounting frame
- 22: Cover section
- 23: Sealing lip
- 24: Inner receiving section
- 25: Cartridge receiving section
- 26: Cartridge receiving section
- 27: Snap hook receiver
- 28: Side wall
- 29: Side wall
- 30: Guidance track
- 31: Guidance track
- 32: Air heating and guidance mechanism
- 33: Fixing element
- 34: Heater carrier and air guidance element
- 35: Air diffusor
- 36: Basic section
- 37: Heater receiving section
- 38: Side wall
- 39: Side wall
- 40: Breakthrough
- 41: Top wall
- 42: Top wall
- 43: Bottom wall
- 44: Bottom wall
- 45: Guidance track
- 46: Guidance track
- 47: Housing
- 48: Housing body
- 49: Housing cover
- 50: Bottom
- 51: Front wall
- 52: Rear wall
- 53: Side wall
- 54: Side wall
- 55: Frame section
- 56: Snap hook
- 57: Snap hook
- 58: Guidance pin
- 59: Guidance pin
- 60: Separating wall
- 61: Separating wall
- 62: Separating wall
- 63: Housing room
- 64: Housing room
- 65: Housing room
- 66: Housing room
- 67: Grid
- 68: Support strut
- 69: Support strut
- 70: Support strut
- 71: Base section
- 72: Snap hook
- 73: Frame section
- 74: Sealing lip
- 75: Layer
- 76: Granulate portion
- 77: Layer
- 78: Layer
- 79: Protrusion
- 80: Protrusion
- 81: Protrusion
- 82: Protrusion

- M1: Sorption mode
- M2: Desorption mode
- Q: Heat
- R1: Regeneration air
- R2: Regeneration air
- RL: Clean air
- RO: Raw air
- U: Environment

## Claims

1. A sorption filter cartridge (19, 20) for a sorption filter element (18), the sorption filter cartridge (19, 20) comprising a fluid permeable housing (47),
wherein the housing (47) encloses a plurality of housing rooms (63, 64, 65, 66) that are separated from each other,
wherein each housing room (63, 64, 65, 66) receives at least two layers (75, 77, 78) of non-woven fiber material and a granulate portion (76) comprising at least one sorbent (8, 9), and
wherein the granulate portion (76) is sandwiched between the at least two layers (75, 77, 78).

2. The sorption filter cartridge according to claim 1, wherein the housing (47) comprises a flexible grid (67) that covers the granulate portion (76),
wherein the grid (67) is deformable by a mounting frame (21) of the sorption filter element (18) when mounting the sorption filter cartridge (19, 20) to the mounting frame (21), and
wherein the granulate portion (76) is compressible by the deformed grid (67).

3. The sorption filter cartridge according to claim 1 or 2, wherein the housing (47) comprises a housing body (48) and a housing cover (49) for closing the housing body (48), and
wherein the housing cover (49) is snapped into the housing body (48) for connecting the housing cover (49) to the housing body (48).

4. The sorption filter cartridge according to claim 3, wherein the housing cover (49) comprises flexible snap hooks (72) that engage with a frame section (55) of the housing body (48) for connecting the housing cover (49) to the housing body (48).

5. The sorption filter cartridge according to claim 3 or 4, wherein the housing body (48) comprises a plurality of separating walls (60, 61, 62) that separate the housing rooms (63, 64, 65, 66) from each other.

6. The sorption filter cartridge according to claim 2, wherein the housing (47) comprises flexible snap hooks (56, 57) that engage with snap hook receivers (27) of the mounting frame (21) for mounting the sorption filter cartridge (19, 20) to the mounting frame (21).

7. The sorption filter cartridge according to claim 2 or 6, wherein the housing (47) comprises guidance pins (58, 59) that engage with guidance tracks (30, 31) of the mounting frame (21) for mounting the sorption filter cartridge (19, 20) to the mounting frame (21).

8. The sorption filter cartridge according to one of claims 1 - 7, wherein the granulate portion (76) is sandwiched between a first layer (75) of non-woven fiber material and a second layer (77) of non-woven fiber material, and
wherein the second layer (77) is sandwiched between the granulate portion (76) and a third layer (78) of non-woven fiber material.

9. A sorption filter element (18) comprising:
a mounting frame (21); and
the sorption filter cartridge (19, 20) according to one of claims 1 - 8,
wherein the sorption filter cartridge (19, 20) is releasably mounted to the mounting frame (21).

10. The sorption filter element according to claim 9, wherein the mounting frame (21) comprises:
a first cartridge receiving section (25) for receiving a first sorption filter cartridge (19); and
a second cartridge receiving section (26) for receiving a second sorption filter cartridge (20).

11. The sorption filter element according to claim 10, wherein the first sorption filter cartridge (19) and the second sorption filter cartridge (20) are arranged in a V-configuration within the cartridge receiving sections (25, 26).

12. The sorption filter element according to claim 10 or 11, wherein each cartridge receiving section (25, 26) comprises snap hook receivers (27),
wherein each housing (47) of the sorption filter cartridges (19, 20) comprises flexible snap hooks (56, 57) that engage with the snap hook receivers (27) for mounting the sorption filter cartridges (19, 20) to the cartridge receiving sections (25, 26).

13. The sorption filter element according to one of claims 10 - 12, wherein each cartridge receiving section (25, 26) comprises guidance tracks (30, 31),
wherein each housing (47) of the sorption filter cartridges (19, 20) comprises guidance pins (58, 59) that engage with the guidance tracks (30, 31) for mounting the sorption filter cartridges (19, 20) to the cartridge receiving sections (25, 26).

14. The sorption filter element according to one of claims 10 - 13, wherein each housing (47) of the sorption filter cartridges (19, 20) comprises flexible grids (67) that cover the granulate portion (76),
wherein the mounting frame (21) deforms the grids (67) when mounting the sorption filter cartridges (19, 20) to the mounting frame (21), and
wherein the granulate portion (76) is compressed by the deformed grids (67).

15. The sorption filter element according to claim 14, wherein the mounting frame (21) comprises protrusions (79, 80, 81, 82) that deform the grids (67), and
wherein the protrusions (79, 80, 81, 82) protrude into the cartridge receiving sections (25, 26).
